# EUROPÄISCHE PATENTSCHRIFT

(11) **EP 2 581 330 B1**
(45) Veröffentlichungstag und Bekanntmachung des Hinweises auf die Patenterteilung: **19.03.2014**
(21) Anmeldenummer: 11401611.6
(22) Anmeldetag: 10.10.2011
(51) Int. Cl.: B65G 21/14, B65G 67/08

(54) **Shuttle-Band**
Shuttle belt
Bande-navette

(43) Veröffentlichungstag der Anmeldung: 17.04.2013
(73) Patentinhaber: Wipotec Wiege- und Positioniersysteme GmbH, 67657 Kaiserslautern (DE)
(72) Erfinder: Schulzki, Alexander, 67705 Stelzenberg (DE); Joachim, Mathias, 66953 Pirmansens (DE)
(74) Vertreter: Eder, Christian

(56) Entgegenhaltungen:
- EP-A1- 1 826 154
- EP-A2- 0 799 780
- WO-A1-2009/008123
- GB-A- 1 538 389
- US-A- 6 068 111

## Beschreibung

Die Erfindung betrifft eine Fördervorrichtung mit einer Transportstrecke für Stückgüter.

Derartige Vorrichtungen werden beispielsweise in Form einer Vorrichtung zum Ein- und/oder Ausladen von Gütern in und/oder aus einem Laderaum, insbesondere einem Container verwendet, um Container zu be- und/oder entladen, welche per Lastkraftwagen, Schiff, Bahn, Flugzeug etc. als Fracht transportiert werden. So wird beispielsweise in der DE 102007017288 B4 eine Anlage zum Einladen von Gepäckstücken in in Flugzeugen mitführbaren Containern vorgeschlagen. Zudem werden derartige Vorrichtungen auch verwendet, um in einem Transportmedium (Zugwaggon, Flugzeug, Schiff, Lastkraftwagen etc.) vorhandenen Laderaum direkt zu be- und/oder entladen. Beispielsweise sind aus der EP 1667907 B1, DE 10210575 A1 und DE 10007332 C2 Systeme zum Be- und Entladen eines Laderaums eines Flugzeugs bekannt.

Nachteiligerweise ist es mit bekannten Vorrichtungen nicht möglich, Güter zu oder von dem Laderaum schnell und zuverlässig zu befördern und gezielt in dem Laderaum abzulegen oder aufzunehmen, wenn der Laderaum eine teleskopartige Ein- und Ausfahrbarkeit der Fördervorrichtung erfordert und zumindest in dem längenveränderbaren Bereich der Fördervorrichtung nur geringe Abmessungen (Seite und Höhe) gestattet.

Der Erfindung liegt daher die Aufgabe zugrunde, eine Fördervorrichtung zu schaffen, welche ein schnelles und zuverlässiges Befördern von Stückgütern, insbesondere zu und von einem Laderaum, und eine teleskopartige Ein- und Ausziehbarkeit der Fördervorrichtung bei geringen baulichen Abmessungen auf einfache und kostengünstige Art und Weise ermöglicht.

Diese Aufgabe wird erfindungsgemäß durch eine Vorrichtung mit den Merkmalen des Patentanspruchs 1 gelöst.

Indem innerhalb der Transportstrecke - das heißt nach Definition der Erfindung ausdrücklich nicht an deren Ende sitzend bzw. nicht deren Abschluss bildend - zwischen zwei nicht direkt aneinander anschließenden Abschnitten der Transportstrecke ein vor- und rückwärts beweglich ausgebildetes Shuttle-Band bzw. Shuttle-Bandeinheit angeordnet ist, kann auf diese Weise eine Lücke in der Transportstrecke, welche beispielsweise durch eine Längenveränderung der Transportstrecke erzeugt wurde, überbrückt werden. Selbstverständlich ist es aber auch denkbar, dass eine permanent vorhandene Lücke in einer Transportstrecke überbrückt wird, wobei sich durch vor- und rückwärts steuerbare Beweglichkeit des Shuttle-Bandes vorteilhafterweise die Möglichkeit ergibt, einen auf der Transportstrecke zu befördernden Güterstrom zu vereinzeln oder zu verdichten. Hierbei ist es durch ein entsprechendes individuelles Ansteuern des Shuttle-Bandes (dessen Vor- und Rückwärtsbewegung, dessen Geschwindigkeit, sowie die Förderrichtung und Geschwindigkeit dessen wenigstens einen Einzelgurtes) sogar möglich, einen gewünschten vordefinierten Abstand zwischen zwei aufeinander folgenden Gütern zu erzielen und/oder die Fördergeschwindigkeit zu verändern, um beispielsweise einen zwischen zwei Abschnitten bestehenden Unterschied in der Fördergeschwindigkeit, insbesondere durch kontinuierliche Änderung der Geschwindigkeiten, entsprechend anzupassen bzw. auszugleichen.

In weiterer Ausgestaltung der Erfindung ist das Shuttle-Band wenigstens teilweise unter einen angrenzenden Abschnitt der Transportstrecke einfahrbar ausgebildet. Hierdurch wird eine besonders kompakte Bauweise hinsichtlich einer Längenveränderung ermöglicht, da das Shuttle-Band zum Teil oder sogar in Gänze unter einen angrenzenden Abschnitt der Transportstrecke (beispielsweise vor dem Shuttle-Band) eingefahren werden kann und auf diese Weise die zwei nicht direkt aneinander anschließenden Abschnitte der Transportstrecke in einer eingefahrenen Position näher kommen oder sogar unmittelbar aneinander anschließen (vollkommenes Einfahren bzw. Einziehen zumindest des Shuttle-Bandes unter einen Abschnitt) oder sogar einander überlappen (weiteres Einfahren). Unabhängig hiervon kann in jeder Position des teleskopartigen Aus- bzw. Einfahrens der Fördervorrichtung durch das Shuttle-Band eine lückenlose Übergabe an den angrenzenden unterfahrbaren Abschnitt gewährleistet werden.

In einer besonders vorteilhaften Ausgestaltung der Erfindung ist das Shuttle-Band wenigstens teilweise über einen angrenzenden Abschnitt der Transportstrecke hinaus ausfahrbar bzw. verfahrbar ausgebildet oder unter diesen einfahrbar bzw. verfahrbar ausgebildet. Durch eine derartige stufenförmige Anordnung kann eine weitere Verringerung der baulichen Länge in einer eingefahrenen Position erreicht werden. Selbstverständlich ist es aber auch denkbar, die Förderebene des Shuttle-Bandes niveaugleich zu einer oder auch beiden Förderebenen der angrenzenden Bereiche anzuordnen. Hierdurch kann vorteilhafterweise auch hinsichtlich der niveaugleich angrenzenden Abschnitte - gegenüber einer nachteiligen Ausführung mit einem Teleskopförderer - eine geringerer Bauhöhe erreicht werden, da eine Vervielfachung eines Längenabschnittes mittels eines Teleskopförderers auch eine Vervielfachung der Bauhöhe bedingt. Unabhängig hiervon kann hierdurch in jeder Position des teleskopartigen Aus- bzw. Einfahrens der Fördervorrichtung durch das Shuttle-Band eine lückenlose Übergabe an den angrenzenden überfahrbaren Abschnitt gewährleistet werden.

Das Shuttle-Band kann in den verschiedenen Ausgestaltungen der Erfindung eine feste Länge aufweisen. Hierdurch kann es vorteilhafterweise, insbesondere in Form eines Schlittens, mit geringerer Bauhöhe als ein sogenannter Teleskopförderer (längenveränderbares Element mit einem über Umlenkrollen laufenden Gurt), wie beispielsweise aus der DE 4342534 C1 (Fig. 3, Bezugszeichen 18, 20) und der DE 10255843 A1 (Fig. 3, Bezugszeichen 9b, 9d) bekannt) realisiert werden. Durch die erfindungsgemäße Ausgestaltung einer Fördervorrichtung mit einem Shuttle-Band bzw. einer Shuttle-Bandeinrichtung mit wenigstens einem steurbaren (Förder-)Gurt, kann vorteilhafterweise auch einer Verschmutzung von Gurtrollen oder -achsen vermieden werden, wie sie nachteiligerweise bei einem Teleskopförderer auftreten. Da die für das (obenliegende) Fördern vom Fördergut im Betrieb zunehmend verschmutzte Außenseite des Gurtes an den Umlenkrollen, an der Gurtinnenseite anliegt, können sich Verschmutzungen an diesen Rollen anlagern und zu Betriebsstörungen (Schlupf und Durchrutschen des Gurtes, Schwergängigkeit der Rollenführen, etc.) führen. Zudem kann durch das erfindungsgemäße Shuttle-Band samt Auszieheinrichtung gegenüber einem Teleskopförderer vorteilhafterweise ein Verlaufen des Gurtes vermieden werden, da das Shuttle-Band mit nur zwei Rollen bzw. Achsen statt den wenigstens vier Rollen eines Teleskopförderers (drei Führungsrollen und wenigstens eine Umlenkrolle) für den wenigstens einen Gurt auskommt.

In bevorzugter Ausgestaltung der Erfindung befindet sich das Shuttle-Band vor einem am Ende der Transportstrecke angeordneten und als Übergabekopf bzw. Abgabe- und/oder Aufnahmekopf ausgebildeten Abschnitt, so dass durch das Shuttle-Band eine Lücke, welche durch Ein- und Ausfahren der Transportstrecke mittels einer Auszieheinrichtung entsteht, überbrückt wird. Besonders vorteilhaft ist hier, dass nicht nur der Übergabekopf, sondern auch der zu überbrückende Bereich bzw. die Lücke in der Transportstrecke in seinen bzw. ihren baulichen Abmessungen, insbesondere in der Höhe, beispielsweise im Vergleich zu einem Teleskopförderer gering gehalten werden kann, so dass auch dieser Bereich in beengten Situationen, wie beispielsweise in einem nur bedingt zugänglicher Laderaum, durch seine geringen Abmessungen in entsprechende Bereiche (Laderaumöffnungen, enge Durchreichen, etc.) hinein oder gar hindurch ausgefahren werden kann.

In dieser Ausgestaltung kann durch das Shuttle-Band die Positioniergeschwindigkeit des Übergabekopfes und damit die Geschwindigkeit zum Ablegen/Abwerfen und/oder Aufnehmen von Fördergütern erhöht werden, da der Übergabekopf nach Abwurf oder Aufnahme eines Förderguts, insbesondere Gepäckstücks, nicht zum angrenzenden Abschnitt der Transportstrecke zurückgefahren werden muss, um dort ein neues Fördergut aufzunehmen oder das aufgenommene dort abzugeben, sondern über das Shuttle-Band im Pendelbetrieb oder Permanentbetrieb (stationäre Position bei im Vergleich zur Shuttle-Bandlänge kleiner oder gleich großer zu überbrückenden Lückenlänge) bereits das nächste Fördergut angefördert oder das aufgenommene Fördergut dort abgelegt werden kann.

In weiterer vorteilhafter Ausgestaltung der Erfindung ist der Übergabekopf innerhalb der Förderebene drehbar in Form eines Drehförderers, vorzugsweise mit wenigstens einem steuerbaren Einzel(förder-)band bzw. -gurt, ausgebildet. Hierdurch ist es vorteilhafterweise möglich, ein gezieltes Abgeben/Abwerfen oder Aufnehmen in oder aus beliebigen Positionen zu ermöglichen, wobei durch das Shuttle-Band nicht nur der Platz sparende Drehförderer, sondern auch wenigstens ein Teil des Bereichs der Transportstrecke aufgrund seiner baulichen geringen Abmessungen in beengten Situationen, wie beispielsweise schwer zugängliche Laderäume, im Vergleich zum Laderaum kleinere Öffnungen etc., an derartige Bereiche heran, hinein oder gar hindurch ausgefahren werden können.

Durch die erfindungsgemäße Ausbildung eines Shuttle-Bandes in Form eines (selbst mit im Vergleich zur Förderbandgeschwindigkeit hoher Geschwindigkeit) verfahrbaren Bandsegments kann vorteilhafterweise ein alternierender und/oder zyklischer Transport von Fördergut gewährleistet werden. In den verschiedenen Ausgestaltungen der Erfindung kann die (optimale) Betriebsweise vorteilhafterweise in Abhängigkeit der jeweiligen Auszugslänge sowie weiterer Parameter, wie beispielsweise gewünschte Übergabegeschwindigkeit (am Übergabekopf), tatsächliche Fördergeschwindigkeit, gewünschter Abstand zwischen Gütern, tatsächlicher Abstand zwischen Gütern, erforderliche Bewegungszeit) eines als Drehförderer ausgebildeten Übergabekopfes, automatisch berechnet und eingestellt (mittels einer Auswerte- und Steuereinheit) werden.

Hierbei ist für das Shuttle-Band in den verschiedenen Ausgestaltungen der Erfindung je nach Größe der zu überbrückenden Lücke ein Pendelbetrieb (Lücke größer als eine beispielsweise fest eingestellte Länge des Shuttle-Bandes) oder ein permanenter Betrieb mit einer festen Position (Zwischenposition) des Shuttle-Bandes (in Förderrichtung gesehene Lücke kleiner oder gleich der in dieser Richtung wirkenden festen Länge des Shuttle-Bandes oder zumindest geringere Abstände zwischen Shuttle-Band und angrenzenden Abschnitten bzw. Bereichen als die in Förderrichtung gesehene Länge des Fördergutes) möglich. Im Falle eines kompletten Einfahrens bzw. Einziehens der Transportstrecke - im Folgenden Förderarms genannt - kann das Shuttle-Band zum Teil oder gänzlich unter einen angrenzenden Abschnitt der Transportstrecke in eine Parkposition eingefahren werden.

Bei einer zumindest teilautomatische Gepäckverladung mit dem Förderarm basiert in weiterer Ausgestaltung der Erfindung auf einer lagerichtigen Zuführung des Gepäcks bzw. Gutes, so dass es möglichst platzsparend in einem Transportbehälter bzw. Container abgelegt werden kann. Da Transportbehälter oftmals nur von einer Seite zugänglich sind, ist es für eine manuelle Entladung dieses Transportbehälters wichtig, dass alle Griffe und Traghilfen der beim Einladen abgelegten Gepäckstücke zur offenen Seite des Transportbehälters orientiert sind. Dadurch ergeben sich für eine spätere manuelle Entladung die notwendigen Griffpunkte, um das Gepäck problemlos greifen zu können. Ein Drehförderer oder Drehsorter in einer Gepäckzuführung erlaubt es hierbei, die Drehlage eines Gepäckstücks zu beeinflussen. Diese Vorrichtung sorgt dafür, dass Gepäckstücke immer so auf dem aufgefördert werden, dass Sie entlang ihrer Längs- oder Querachse in den Transportbehälter abgelegt werden können. Zur Erkennung und Korrektur der Drehlage während des Zuförderns der Gepäckstücke kann die Zufördereinrichtung des Förderarms beispielsweise mit einem Kamerasystem ausgestattet sein, das die Drehlage eines Gepäckstücks ermittelt und dem Drehförderer bzw. Drehsorter ein Bewegungskommando zur Korrektur dieser Drehlage übergibt. Das Kamerasystem kann hierbei in vorteilhafter Ausgestaltung der Erfindung auch die Position von Griffen und Tragehilfen an Gepäckstücken ermittelt. Diese Information wird genutzt, um das Gepäckstück in der Drehlage so zu korrigieren, dass die gewünschte Drehlage eingenommen wird, also beispielsweise Griffe und Tragehilfen sich immer auf der gleichen Seite befinden.

In weiterer Ausgestaltung der Erfindung ist an der als Förderarm ausgebildeten Fördervorrichtung, insbesondere am Übergabe- und/oder Entnahmekopf, wenigstens ein Sensor (Bild-, Dimensions-, Gewichtsensor, Kamera, Abstandsmessung per Funk oder Schall, Licht, etc.) angeordnet, um Kollisionen mit der Umgebung (Laderaum, Umfeld des Förderarms etc.) zu vermeiden und/oder Positionen zu bestimmen. Hierbei kann in weiterer Ausgestaltung der Erfindung wenigstens einer der Ablageparameter: Raumausrichtung, Geschwindigkeit und Endposition des abzuwerfenden Gutes, mittels des Sensors und einer Auswerteeinrichtung zumindest vorschlagsweise berechnet werden. Selbstverständlich ist es auch denkbar, neben der Position des Übergabe- und/oder Entnahmekopfes im Laderaum bzw. relativ zum Laderaum Parameter wie Gewicht, Abmessungen des Gutes (Volumen bzw. Dimension) sowie Folgeparameter wie Abwurfkurve etc. zu ermitteln und gegebenenfalls in Abhängigkeit hiervon den Vorgang des Ablegens und/oder Aufnehmens eines Gutes auszuführen oder zumindest den Vorgang (oder zumindest einen Ablageparameter) für eine Bedienperson vorzuschlagen.

Eine derartige Ausstattung mit wenigstens einem Sensor ermöglicht durch ein- oder mehrmalige Messung auch die Bestimmung der Raumlage, d.h. die Lage bezogen auf ein festgelegtes Koordinatensystem und die Abmessungen von Transportbehältern im Arbeitsraum des Förderarms. Beispielsweise können über einen Laser-Abstandsensor geometrische Merkmale (z. B. Seitenwand links, Seitenwand rechts, Rückwand) eines Transportbehälters bzw. Containers abgetastet werden. Aus diesen Messdaten kann dann die Raumlage und die Abmessung des Transportbehälters berechnet werden. Mit der Kenntnis der Raumlage und der Abmessungen eines Transportbehälters kann der Beladevorgang durch steuerungstechnische Maßnahmen vereinfacht und sicherer gestaltet werden.

Zum einen kann der Aktionsradius des Förderarms durch Limitierung der Verfahrbereiche einzelner Bewegungsachsen des Förderarms automatisch (softwaretechnische Begrenzung des Bewegungsraumes) auf den zur Beladung notwendigen Bereich beschränkt werden. Das Risiko einer Kollision mit Hindernissen wird auf diese Weise minimiert. Der Bediener wird entlastet, da bei Überschreitung des zulässigen Arbeitsbereichs die jeweiligen Bewegungsachsen automatisch anhalten. Kollisionen aufgrund von Unachtsamkeit des Bedieners sind somit ausgeschlossen.

Zum anderen kann die Interpretation der Steuerkommandos des Bedieners bei Bedarf oder auch automatisch an die jeweilige Beladesituation oder an die Vorliebe des Bedieners angepasst werden. Grundsätzlich sind zwei Interpretationsmöglichkeiten vorgesehen. Die von der Bedienperson über entsprechende Eingabegeräte (z. B. Joysticks) vorgegebenen Bewegungskommandos werden entweder im Maschinenkoordinatensystem des Förderarms oder im Koordinatensystem eines Transportbehälters ausgeführt. Die vorstehend beschriebene Umschaltung zwischen unterschiedlichen Koordinatensystemen bei der Umrechnung der Bedienerkommandos in Fahrkommandos für die einzelnen Antriebsachsen erleichtert auch die Bedienung mit einem abgesetzten und ggf. mobilen Bedienteil bzw. -stand. Hierbei kann auch eine Umrechnung (Transformation) der vom Bediener getätigten Bewegungsvorgaben in ein beliebiges Koordinatensystem erfolgen.

In weiterer Ausgestaltung der Erfindung kann in die Vorrichtung wenigstens ein Barcode-Lesegerät bzw. einen Scanner und/oder weitere Identifizierungseinrichtungen, wie beispielsweise RFID Empfänger und/oder Sender etc., integriert sein.

In bevorzugter Ausgestaltung der Erfindung wird die Position eines zu beladenden Objekts und damit dessen Laderaum in Relation zur Vorrichtung, beispielsweise optisch, per Funk oder taktil, ermittelt (Einmessen). Nach Vorgabe der gewünschten dreidimensionalen Endpositionen des Gutes (z.B. innerhalb eines kartesischen Koordinatensystems) erfolgt die Steuerung der Vorrichtung rechnergestützt (Ansteuerung der Antriebsachsen, Gelenke, Stellmotoren, Hydraulik, Bänder von Gütern etc.) durch eine Auswerte- und Steuervorrichtung. Ein Eingriff einer Bedienperson erfolgt ebenfalls beispielsweise über kartesische Koordinaten, ohne dass ein Bediener direkt mit den Stellantrieben der Vorrichtung in Verbindung steht oder diese bedient.

Der aktuelle Beladezustand und somit ein optimaler Ablageort für ein Gut kann ebenfalls mittels geeigneter Sensorik ermittelt und gegebenenfalls auf einer graphischen Anzeige angezeigt werden. Hierzu kann ein Gut bereits im Vorfeld (beispielsweise über ein Leitsystem) oder auch erst auf dem Förderarm befindlich in seinen Abmessungen und Parametern detektiert werden. Nach einer Bestätigung und/oder Korrektur kann diese Position von einer Bedienperson freigegeben werden. Hierbei ist es denkbar, erfasste Güter und ermittelte Ablageorte auf einem Display anzuzeigen, wobei ein Bediener per Drag & Drop das Gut an einen ermittelten Platz ziehen kann und auf diese Weise das Kommando für die Anlage erteilt. Hierbei kann die graphische Anzeige Funktionen der Augmented Reality beinhalten, wobei Bildbestandteilen der realen Szene simulierte Bildbestandteile überlagert werden können, um dem Bediener eine optimale Unterstützung zuteil werden zu lassen.

Selbstverständlich kann bei der Bestimmung des optimalen Ablageortes auch die ordnungsgemäße Trimmung eines Laderaums und damit eine Trimmung des den Laderaum beinhaltenden Objektes (Flugzeug, Schiff, Waggon, Container etc.) erreicht werden, wobei hierzu selbstverständlich in die Berechnung neben dem Ablageort bzw. Endposition der Güter auch deren Gewicht und gegebenenfalls Dimension und/oder Schwerpunkt einfließt. Hierzu kann aus der Stellung bzw. Position der Bewegungsachsen (sofern zuvor die Raumlage des Transportbehälters ermittelt wurde) berechnet werden, an welcher Position innerhalb des Transportbehälters ein Gepäckstück abgelegt wurde. Diese Positionsinformation kann in Verbindung mit der Identifikation des jeweiligen Transportbehälters gespeichert werden. Wenn die Gewichte der verladenen Gepäckstücke bekannt sind, lässt sich das Gesamtgewicht und die Lage des Schwerpunkts des Transportbehälters zumindest näherungsweise berechnen. Diese Information kann zur weiteren Verwendung (z. B. zur Berechnung der Ladereihenfolge oder Trimmung eines Flugzeugs) bereitgestellt werden. Wenn zudem während der Verladung Informationen zur Identität der Gepäckstücke vorliegen, können diese Identitätsinformationen mit der Positionsinformation verknüpft und gespeichert werden. Dadurch ist es möglich, den Transportbehälter und die Position innerhalb dieses Behälters für einzelne Gepäckstücke jederzeit anzugeben.

Weitere vorteilhafte Ausgestaltungen der Erfindung ergeben sich aus den Unteransprüchen.

Die Erfindung wird nachfolgend anhand eines in der Zeichnung dargestellten Ausführungsbeispiels näher erläutert. In der Zeichnung zeigen:
- Fig. 1: eine schematische dreidimensionale Ansicht einer Fördervorrichtung nach der Erfindung in ausgefahrener Position mit einem Shuttle-Band in mittlerer Position;
- Fig. 2: eine schematische Draufsicht der Fördervorrichtung nach der Erfindung in eingefahrener Position mit dem Shuttle-Band in hinterer Position;
- Fig. 3: eine schematische Seitenansicht der Fördervorrichtung in der Position nach Fig. 2;
- Fig. 4: eine schematische Seitenansicht des Endabschnitts der Fördervorrichtung nach der Erfindung in ausgefahrener Position mit dem Shuttle-Band in vorderer Position;
- Fig. 5: eine schematische Seitenansicht des Endabschnitts der Fördervorrichtung nach der Erfindung in ausgefahrener Position mit dem Shuttle-Band in mittlerer Position;
- Fig. 6: eine schematische Seitenansicht des Endabschnitts der Fördervorrichtung nach der Erfindung in ausgefahrener Position mit dem Shuttle-Band in hinterer Position;
- Fig. 7: eine schematische dreidimensionale Ansicht des Endabschnitts der Fördervorrichtung nach der Erfindung in eingefahrener Position mit dem Shuttle-Band in vorderer Position;
- Fig. 8: eine schematische dreidimensionale Ansicht des Endabschnitts der Fördervorrichtung nach der Erfindung in eingefahrener Position mit dem Shuttle-Band in hinterer Position;
- Fig. 9: eine schematische Seitenansicht des Endabschnitts der Fördervorrichtung nach der Erfindung in eingefahrener Position mit dem Shuttle-Band in vorderer Position;
- Fig. 10: eine schematische Seitenansicht des Endabschnitts der Fördervorrichtung nach der Erfindung in eingefahrener Position mit dem Shuttle-Band in hinterer Position;
- Fig. 11: eine schematische dreidimensionale Ansicht des Endabschnitts der Fördervorrichtung nach der Erfindung in ausgefahrener Position mit dem Shuttle-Band in vorderer Position;
- Fig. 12: eine schematische dreidimensionale Ansicht des Endabschnitts der Fördervorrichtung nach der Erfindung in ausgefahrener Position mit dem Shuttle-Band in mittlerer Position;
- Fig. 13: eine schematische dreidimensionale Ansicht des Endabschnitts der Fördervorrichtung nach der Erfindung in ausgefahrener Position mit dem Shuttle-Band in hinterer Position und
- Fig. 14: eine schematische dreidimensionale Ansicht des Endabschnitts der Fördervorrichtung nach der Erfindung in ausgefahrener Position mit dem Shuttle-Band in hinterer Position.

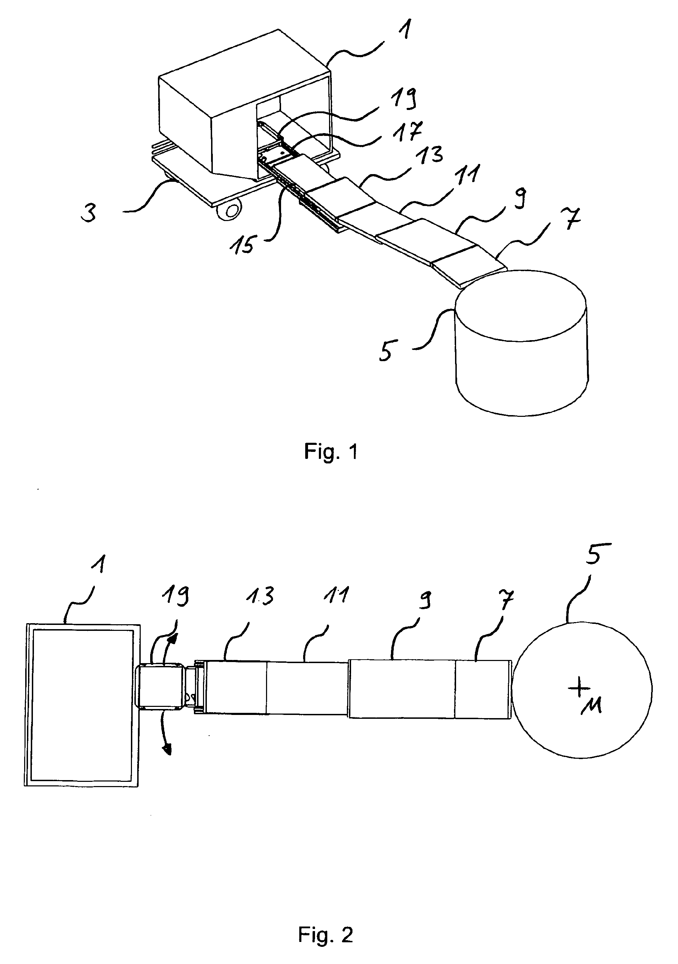

Die in Fig. 1 dargestellte Fördervorrichtung, beispielsweise zum Be- und/oder Entladen eines Containers 1, insbesondere eines ULDs (Unit Load Device), für Gepäckstücke zur Beförderung im Flugverkehr, weist an ihrem einen Endpunkt oder auch Zwischenpunkt einer Transportstrecke einen Drehsorter auf, an welchen sich die eigentliche Transportstrecke, beispielsweise als Förderarm ausgestaltet, in Richtung des zu beladenden Containers 1 anschließt.

Der Förderarm besteht, wie aus Fig. 1 bis Fig. 3 ersichtlich, aus mehreren Elementen, nämlich einem sich an den Drehsorter 5 (mit Drehachse M) anschließenden Anschlussband bzw. Merger 7, einem sich daran anschließenden Linearförderer 9, an welchen sich wiederum ein weiterer Linearförderer 11 anschließt, einem Zuführband 13, welches beispielsweise ebenfalls als Linearförderer ausgebildet ist, sowie dem sich über eine Auszugseinrichtung 17 daran anschließenden Übergabekopf 19, welcher beispielsweise als Drehförderer ausgebildet ist.

Der aus den Elementen 7, 9, 11, 13, 15 und 19 bestehende Förderarm kann hierbei radial um die in Fig. 2 senkrecht zur Zeichenebene stehende Mittelachse M des Drehsorters verschwenkt werden, um mit dem Übergabekopf 19 jede beliebige Raumposition erreichen zu können. Zudem kann der Übergabekopf 19 um die Längsachse des Förderarms drehbar ausgebildet sein.

Wie in Fig. 1 bis Fig. 3 dargestellt, dient die Fördervorrichtung, welche sowohl mobil als auch stationär ausgebildet sein kann, zum Be- und/oder Entladen von Containern 1, insbesondere Trolleys, wie sie beispielsweise für die Gepäckbeförderung im Flugverkehr verwendet werden. Hierzu wird beispielsweise ein durch ein Fahrzeug gezogener Trolleyzug (mit mehreren Wagen, welche jeweils aus einem Containern 1 dem jeweiligen fahrbaren Untersätzen 3 bestehen) in den Bereich der Fördervorrichtung abgestellt und/oder eine mobil ausgebildete Fördervorrichtung an diesen Trolleyzug herangefahren. Die in Fig. 1 bis Fig. 3 dargestellte Einheit aus Trolley 1 samt fahrbarem Untersatz 3 stellt daher nur einen Teil eines solchen Trolleyzuges dar, dessen einzelne Trolleys bzw. Container 1 nach und nach durch entsprechendes Weiterfahren und Wiederabstellen und/oder entsprechende Schwenkbewegung der Fördervorrichtung be- und entladen werden können.

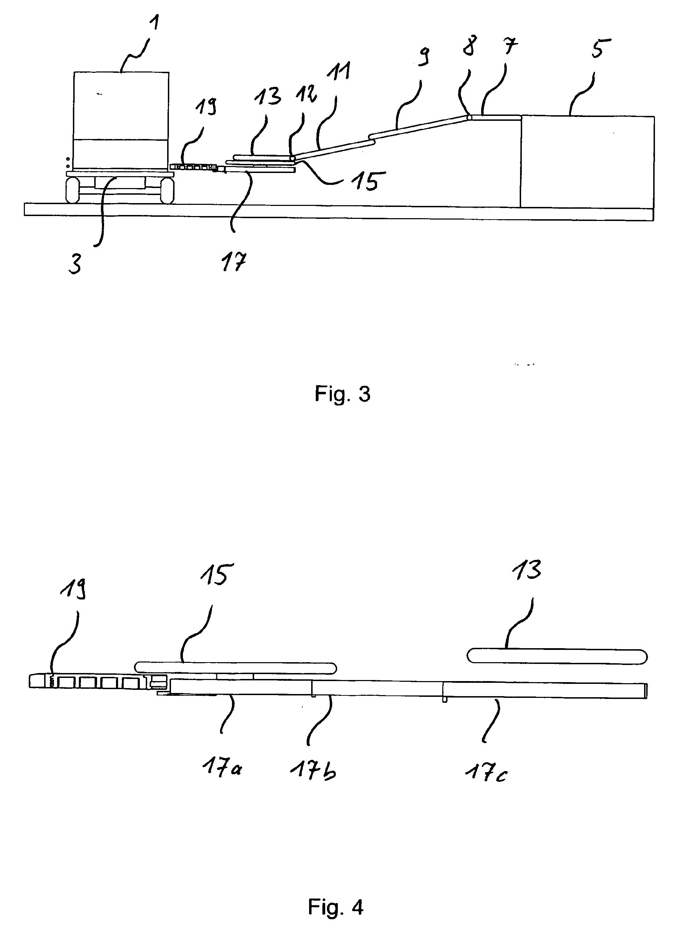

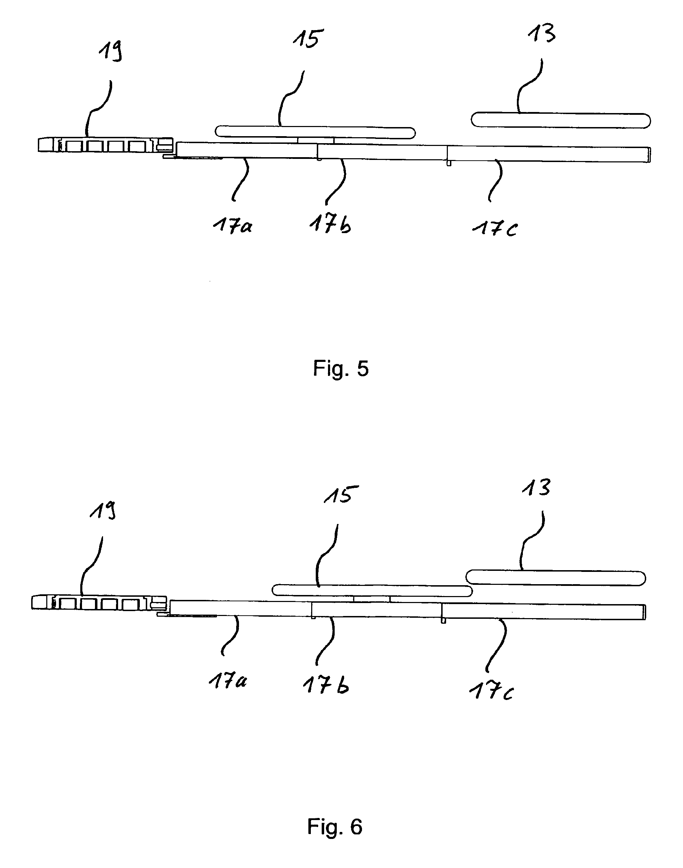

Wie aus Fig. 1 und insbesondere Fig. 3 ersichtlich, ist der Übergabekopf 19 in Längsrichtung unmittelbar an einem Ende einer Auszugseinrichtung 17 angeordnet, welche wiederum an ihrem gegenüberliegenden Ende an dem Zuführband 13, insbesondere unterhalb desselben, angeordnet ist. Diese Auszugseinrichtung 17 ist ähnlich einer ausziehbaren Leiter in mehrere Elemente, beispielsweise in Elemente 17a, 17b und 17c, unterteilt, welche in Richtung des Übergabekopfes zueinander ein- und ausschiebbar ausgebildet sind. Auf diesen (sich vorzugsweise innerhalb einer Ebene senkrecht zur Zeichenebene in Fig. 4, 5 und 6 liegenden) Elementen 17a, 17b und 17c ist das Shuttle-Band 15 individuell in beliebige Positionen steuerbar, verfahrbar angeordnet, wobei in Fig. 4 das Shuttle-Band in seiner vorderen, in Fig. 5 in seiner mittleren, und in Fig. 6 in seiner hinteren Position dargestellt ist.

Um verschiedene Höhenpositionen innerhalb des Containers 1 zu erreichen, kann der Förderarm zwischen einzelnen Elementen, beispielsweise - wie dargestellt - zwischen den Elementen "zweiter Linearförderer 11" und "Zuführband 13", eine senkrecht zur Zeichenebene stehende Drehachse bzw. Drehgelenk 12 (Fig. 3) und zwischen erstem Linearförderer 9 und Merger 7 eine ebenfalls senkrecht zur Zeichenebene liegende Drehachse 8 (Fig. 3) aufweisen, mittels welcher der Förderarm durch geeignete Antriebe auch in seiner Höhe verschwenkbar gesteuert werden kann, wobei mit wenigstens zwei Drehachsen 8, 12 eine im Wesentlichen zu einem Containerboden 1 parallele Lage des Übergabekopfes 19 einstellbar ist. Um ebenfalls in Längsrichtung neben der im Folgenden geschilderten Ausziehbarkeit durch die Auszieheinrichtung 17 eine Reichweitenvergrößerung zu ermöglichen, können die Linearförderer 9 und 11 beispielsweise als Teleskopförderer ausgebildet sein, so dass eine Längenveränderung auch in diesem Bereich des Förderarms ermöglicht wird.

Wie in Fig. 4 und Fig. 6 dargestellt, kann das Shuttle-Band 15 in seiner in Fig. 4 dargestellten Position in einen Bereich über dem Übergabekopf 19 hineinreichen und diesen überlappen. Ähnlich kann, wie in Fig. 6 dargestellt, das Shuttle-Band 15 unterhalb des Zuführbands 13 zu einem Teil eingefahren werden, so dass das Zuführband 13 das Shuttle-Band 15 überlappt.

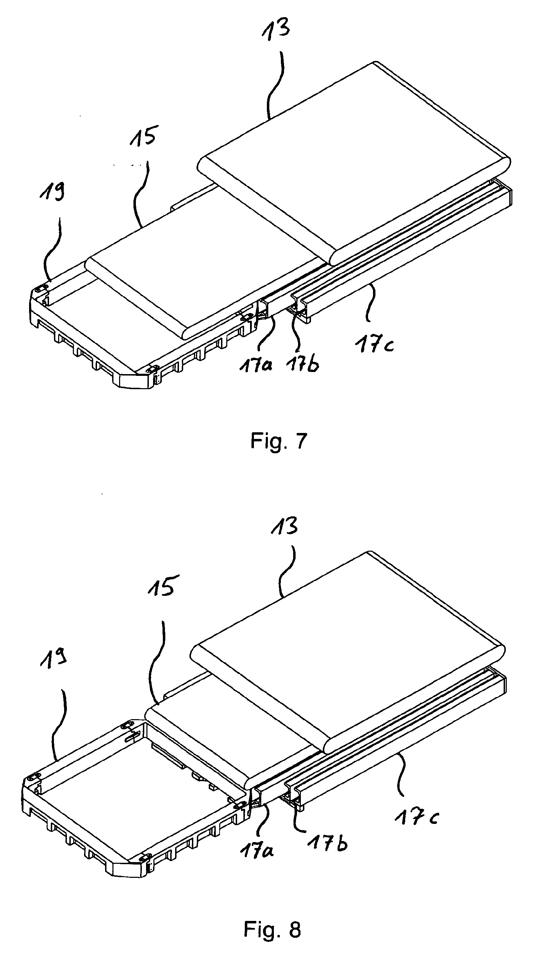

Entgegen der in Fig. 3 bis Fig. 6 dargestellten, ausgefahrenen Position der Auszieheinrichtung 17 zeigen Fig. 7 bis Fig. 10 die Auszieheinrichtung 17 in ihrer eingefahrenen Position, wobei - wie aus Fig. 7 und 8 ersichtlich - die jeweiligen Elemente 17a, 17b und 17c seitlich Längsschienen aufweisen, welche in einer Ebene parallel zur Förderebene nach innen gerichtete U-Profile besitzen. Diese Längsschienen sind bezüglich der Elemente 17c, 17b und 17a in abnehmender seitlicher Breite angeordnet, so dass sie in der in Fig. 7 bis Fig. 10 dargestellten eingefahrenen Position ineinander geschoben werden können. Für das Ausziehen bzw. Einschieben können hierbei die einzelnen Elemente zueinander rollengelagert sein, wobei die Verschiebbarkeit über unmittelbar angeordnete Stellmotoren an den Rollen und/oder entsprechende mittelbare Verbindungen, wie Seilzug, Zahnriemen, etc. realisiert sein kann.

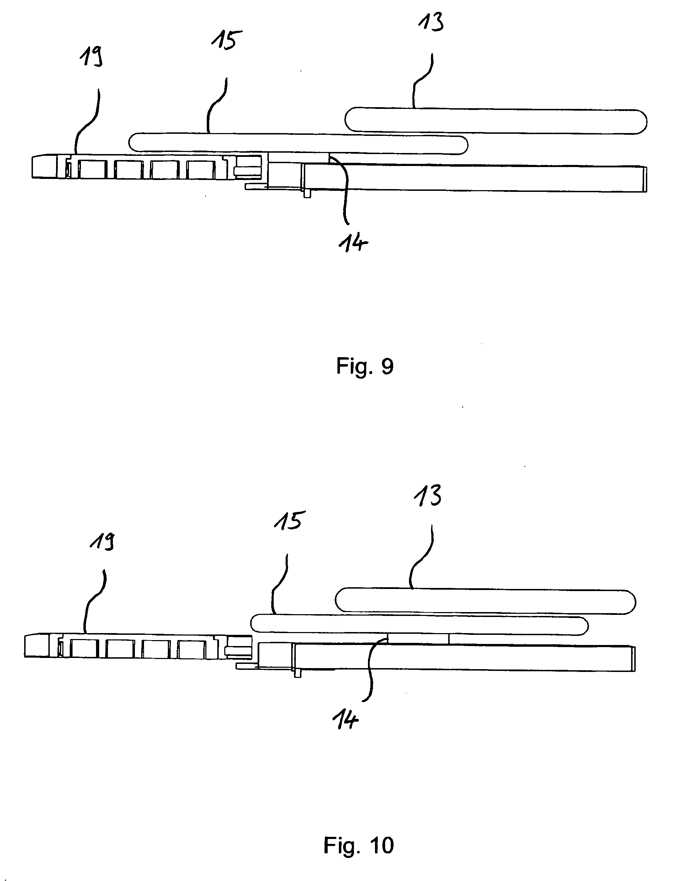

Innerhalb dieser Auszieheinrichtung 17 ist das Shuttle-Band 15 auf einem in Fig. 9 und 10 dargestellten, mittig angeordneten Fuß in Längsrichtung des Förderarms bewegbar (beispielsweise ebenfalls über Rollenlager, welche unmittelbar oder mittelbar über einen Stellmotor angetrieben werden) gelagert. Hierdurch kann insbesondere hinsichtlich des Übergabekopfes 19 eine wie in Fig. 9 dargestellte Überlappung erreicht werden, wobei der Fuß 14 bis in seine Endposition bewegt wird und damit der ab diesem Fuß in Richtung des Übergabekopfes 19 gerichtete Bereich des Shuttle-Bandes 15 über diesen Übergabekopf 19 hinausreicht.

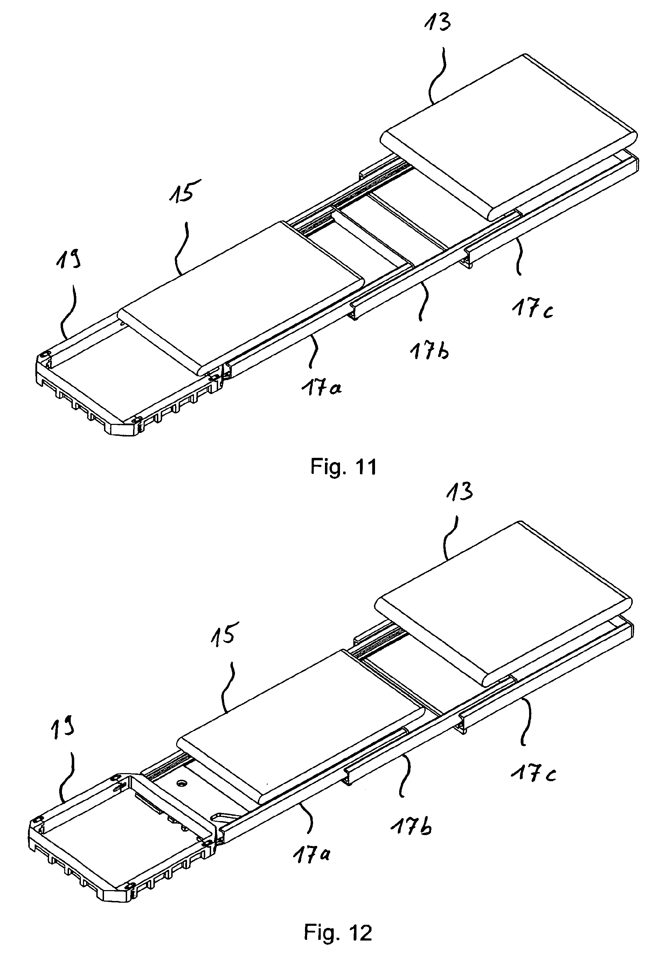

Wie aus Fig. 11 ersichtlich, können hierzu die Elemente 17a, 17b und 17c aus entsprechenden Rahmenteilen bestehen, wobei das Shuttle-Band 15 mit seinem Fuß 14 innerhalb des Rahmenteils 17a bewegbar ist und damit in seiner einen Endposition sowohl den Übergabekopf 19 zu einem Teil überfahren kann (siehe Fig. 9) als auch in seiner anderen Endposition das Zuführband 13 (siehe Fig. 10) unterfahren kann. Auch wenn ein Über- oder Unterfahren nicht unbedingt notwendig ist, da je nach Gepäckstücklänge in Förderrichtung gesehen selbst Lücken im Förderband unproblematisch überbrückt werden können, kann durch diese Über- und Unterfahrbarkeit insbesondere bei kleinen Gepäckstücken ein fehlerhaftes Stoppen der Beförderung vermieden werden.

Da der Übergabekopf 19 vorteilhafterweise in seiner dargestellten (nicht verdrehten) Grundstellung seitlich abgeflacht ausgebildet ist und auf diese Weise in seinen seitlichen Abmessungen in dieser Position den Förderarm nicht überragt, können bei einem Verdrehen des als Drehförderer ausgebildeten Übergabekopfes 19 im Unterschied zu einem kreisförmig ausgebildeten Übergabekopf Lücken bzw. Ecken und Spalten entstehen, welche durch das Überlappen des Shuttle-Bandes 15 selbst in einer verdrehten Position des Übergabekopfes 19 überdeckt werden, so dass auf diese Weise Probleme in der Beförderung vermieden werden können.

Die Anordnung des Endbereiches des Förderarms, nämlich Zuführband 13, Shuttle-Band 15 und Übergabekopf 19, nimmt hierbei bezüglich der Förderebene in Richtung des Übergabekopfes stufenförmig ab (Wasserfallprinzip), wodurch nicht nur vorgenanntes Überlappen und Unterfahren ermöglicht wird, sondern zudem ein komplettes Einfahren des Shuttle-Bandes 15 unter das Zuführband 13 denkbar ist. Auf diese Weise wird eine möglichst geringe längliche Ausdehnung trotz gleich bleibender maximaler Ausdehnung der Auszieheinrichtung 17 und damit eine größere Reichweite des gesamten Förderarms ermöglicht.

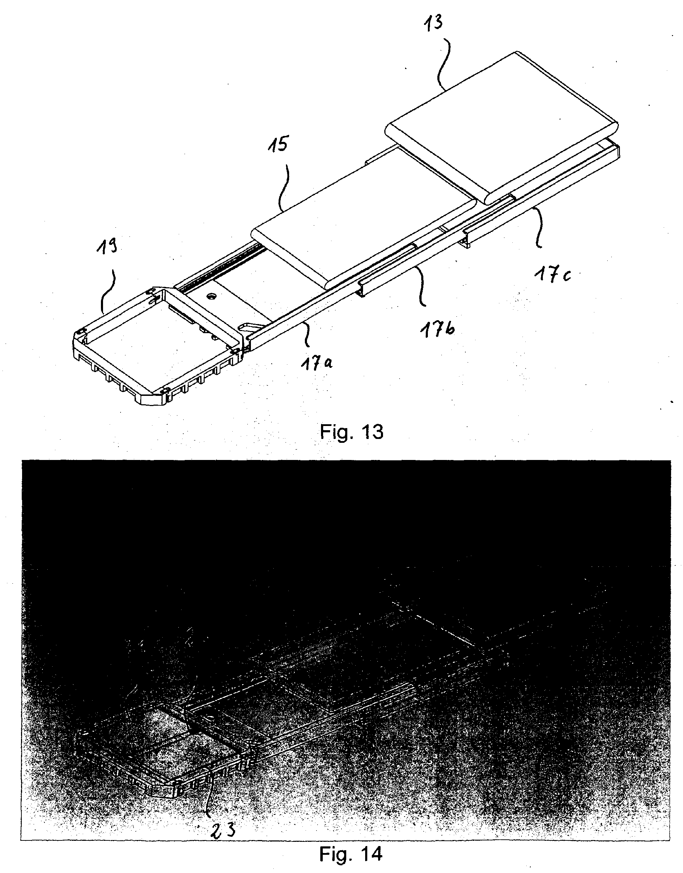

An bzw. auf den vorgenannten Elementen Linearförderer bzw. Teleskopförderer 9, 11, Merger 7, Zuführband 13 und Shuttle-Band 15 ist jeweils wenigstens ein steuerbares Einzel(förder-)band bzw. -gurt angeordnet, welches wiederum über geeignete Antriebe (Rollen 25, Achsen und damit unmittelbar oder mittelbar verbundene Motoren) sowohl in Förderrichtung als auch Geschwindigkeit gesteuert werden kann. Der als Drehförderer ausgebildete Übergabekopf 19 kann hierbei, wie aus Fig. 14 ersichtlich, auch mehrere, beispielsweise zwei, steuerbare parallele Einzelgurte 21, 23 aufweisen, welche wiederum individuell gesteuert und wie vorstehend erläutert angetrieben sind. Neben einer Drehbewegung des Übergabekopfes 19 innerhalb seiner Förderebene, kann auch ein unterschiedliches Ansteuern der zueinander mehreren parallelen Einzelgurte 21, 23 eine Lageänderung des sich auf dem Übergabekopf 19 befindlichen Stückgutes bewirken. Selbstverständlich ist es auch denkbar, die übrigen vorgenannten in der Transportstrecke befindlichen Elemente mit wenigstens zwei steuerbaren, zueinander parallelen Einzelgurten auszustatten.

Obwohl im vorhergehenden Ausführungsbeispiel der letzte Bereich des Förderarms 13, 15, 19, wasserfallartig ausgebildet ist, ist es selbstverständlich auch denkbar, einzelne oder auch alle Elemente 13, 15 und 19 innerhalb einer Ebene zueinander anzuordnen. Hierdurch könnte trotz eventuell geringerer Reichweite in Längsrichtung eine geringere Bauhöhe erreicht werden, welche in besonderen Anwendungen von Vorteil ist.

Weiterhin ist die Erfindung nicht auf das dargestellte Ausführungsbeispiel beschränkt. So kann das Shuttle-Band 15 selbstverständlich in einer beliebigen Förderstrecke oder Transportstrecke befinden, wobei vorzugsweise das Ende einer Transportstrecke - beispielsweise in Form des dargestellten Förderarms (Pfeile in Fig. 2) - durchaus in Schwenkbewegungen zeigerförmig bzw. radial um einen vom Übergabekopf 19 entfernten Punkt innerhalb der Zeicheneben (Fig. 2) geschwenkt werden kann und sogar eine Bewegung der gesamten Fördervorrichtung bzw. des Förderarms möglich ist, wie es beispielsweise in der DE 10 2010 037 472.5 und PCT/DE2011/075216 offenbart ist, auf welche ausdrücklich Bezug genommen wird.

Wird nun die Auszieheinrichtung, beispielsweise um das Innere eines Containers 1 zu erreichen, ausgefahren, so dass der Übergabekopf 19 in die Laderaumöffnung hinein oder durch diese hindurch ragt, so kann zwischen dem Zuführband 13 (also dem letzten Abschnitt des Förderarms ohne Shuttle-Band 15) und dem Übergabekopf 19 eine Lücke entstehen, welche für einen Transport von Fördergut, insbesondere Gepäckstücke (Koffer, Taschen, Pakete etc.) durch eine permanente Position des Shuttle-Bandes 15 nicht mehr einwandfrei überbrückt werden kann (siehe Fig. 5).

In dieser Situation kann das Shuttle-Band von einer entsprechenden auch für die weitere Steuerung der Förderarmelemente (seitliches Schwenken, Ausfahren, Höhenverstellung, Förderbandrichtung und -geschwindigkeiten, etc.) verantwortlichen Auswerte- und Steuerelektronik in einen Pendelbetrieb versetzt werden. In einem derartigen Pendelbetrieb werden Fördergüter je nach Geschwindigkeit des Anförderns und/oder der zwischen den Fördergütern bestehenden Abstände von dem Shuttle-Band am Zuführband 13 aufgenommen, vorzugweise mit entsprechend zur Bandrichtung und Geschwindigkeit des Zuführbandes 13 angepassten Richtung und Geschwindigkeit des wenigstens einen steuerbaren Einzel(förder-)gurtes 21, 23 des Shuttle-Bandes 15 sowie der mitwirkenden Richtung und Geschwindigkeit des Shuttle-Bandes 15 selbst (bzw. der hieraus daraus resultierende Relativbewegung)..

Nach kompletter Aufnahme (zumindest der Schwerpunkt des Fördergutes liegt hierbei über dem Shuttle-Band) vorzugsweise eines einzigen Förderguts, insbesondere Gepäckstücks, wird das Shuttle-Band 15 in Richtung des Übergabekopfes 19 in einer steuerbaren gewünschten Geschwindigkeit bewegt, so dass das Fördergut am Übergabekopf in einem gewünschten einstellbaren Zeitfenster bzw. zeitlichen Abstand zum vorherigen und zum nächsten Fördergut angeliefert wird. Hierbei kann der wenigstens eine steuerbare Einzelgurt und/oder das Shuttleband 15 und/oder die für das Stückgut resultierende Bewegung hieraus eine steuerbare Bewegung (stillstehen, konstante Geschwindigkeit oder beschleunigen/verzögern) entlang einer beliebigen Geschwindigkeit-Zeit-Kurve erfahren, so dass zumindest beim Anliefern und Übergeben an den Übergabekopf vorzugsweise die Geschwindigkeit an die Geschwindigkeit des wenigstens einen steuerbaren Einzelgurtes des Übergabekopfes 19 für einen reibungsfreien Übergang angepasst ist.

Wie in Fig. 14 dargestellt, kann der Übergabekopf selbstverständlich statt eines einzigen Gurtes auch zwei zueinander parallel angeordnete Einzelgurte 21 und 23 aufweisen. Ebenso können an den weiteren Förderelementen (Linearförderer, Teleskopförderer, Drehförderer, etc.) statt einem einzigen Gurt auch mehrere zueinander parallele Einzelgurte angeordnet sein, um eine Beförderung der Stückgüter zu ermöglichen

Indem das Shuttle-Band 15 in einer Endposition den Übergabekopf 19 teilweise überlappt (siehe Fig. Fig. 9), können auch Lücken bzw. unterschiedliche Abstände zur Auszieheinrichtung 17 bzw. dessen anschließendes Element 17a überbrückt werden, welche durch Drehung des Übergabekopfes 19 entstehen können.

Hierdurch lässt sich auf einfache Art und Weise eine baulich in Seite und/oder Höhe geringe Abmessung des Übergabekopfes 19 und/oder der Bereiche 17a, 17b, 17c der Auszieheinrichtung 17 und des Shuttle-Bandes 15 sowie möglicherweise der daran angrenzenden Bereiche, wie Zuführungen, insbesondere Linearförderer, realisieren, so dass auch ein Fördern in räumlich beengten Situation, oder ein Be- und Entladen eines nur bedingt erreichbaren Laderaums ermöglicht wird.

### Bezugszeichenliste

- 1: Container bzw. Trolley, ULD
- 3: Untersatz auf Rollen bzw. Rädern
- 5: Drehsorter
- 7: Merger
- 8: Drehachse
- 9: erstes Teleskopband
- 11: zweites Teleskopband
- 12: Drehachse
- 13: Zuführband
- 14: Fuß Shuttle-Band
- 15: Shuttle-Band
- 17: Auszieheinrichtung
- 17a: Bereich
- 17b: Bereich
- 17c: Bereich
- 19: Übergabekopf
- 21: Einzelgurt
- 23: Einzelgurt
- 25: Rolle

## Patentansprüche

1. Fördervorrichtung mit einer Transportstrecke (7, 9, 11, 13, 15, 19) für Stückgüter,
**dadurch gekennzeichnet, dass**
innerhalb der Transportstrecke (7, 9, 11, 13, 15, 19) zwischen zwei nicht direkt aneinander anschließenden Abschnitten (13, 19) der Transportstrecke ein Shuttle-Band (15) angeordnet ist, welches in Förderrichtung gesehen vor- und rückwärts steuerbar beweglich ausgebildet ist und wenigstens einen steuerbaren Einzelgurt aufweist, um auf diese Weise eine Lücke in der Transportstrecke (7, 9, 11, 13, 15, 19) zu überbrücken.

2. Fördervorrichtung nach Anspruch 1, **dadurch gekennzeichnet, dass** das Shuttle-Band (15) wenigstens teilweise unter einen angrenzenden Abschnitt (13) der Transportstrecke (7, 9, 11, 13, 15, 17, 19) einfahrbar ausgebildet ist.

3. Fördervorrichtung nach Anspruch 1 oder 2, **dadurch gekennzeichnet, dass** das Shuttle-Band (15) wenigstens teilweise über einen angrenzenden Abschnitt (19) der Transportstrecke (7, 9, 11, 13, 15, 19) hinaus ausfahrbar ausgebildet ist.

4. Fördervorrichtung nach einem der vorhergehenden Ansprüche, **dadurch gekennzeichnet, dass** das Shuttle-Band (15) in Bewegungsrichtung und/oder Bewegungsgeschwindigkeit in Abhängigkeit wenigstens einer der Parameter: Auszugslänge, gewünschte Übergabegeschwindigkeit, tatsächliche Fördergeschwindigkeit, gewünschter Abstand zwischen Fördergütern, tatsächlicher Abstand zwischen den Fördergütern und erforderliche Bewegungszeit eines als Drehförderer ausgebildeten Übergabekopfes (19), steuerbar ausgebildet ist.

5. Fördervorrichtung nach einem der vorhergehenden Ansprüche, **dadurch gekennzeichnet, dass** der wenigstens eine steuerbare Einzelgurt des Shuttle-Bandes (15) in Bewegungsrichtung und/oder -geschwindigkeit in Abhängigkeit wenigstens einer der Parameter: Auszugslänge der Transportstrecke, gewünschte Übergabegeschwindigkeit, tatsächliche Fördergeschwindigkeit, gewünschter Abstand zwischen Fördergütern, tatsächlicher Abstand zwischen den Fördergütern und erforderliche Bewegungszeit eines als Drehförderer ausgebildeten Übergabekopfes (19), steuerbar ausgebildet ist.

6. Fördervorrichtung nach einem der vorhergehenden Ansprüche, **dadurch gekennzeichnet, dass** sich das Shuttle-Band (15) vor einem am Ende der Transportstrecke ausgebildeten Übergabekopf (19) befindet.

7. Fördervorrichtung nach einem der vorhergehenden Ansprüche, **dadurch gekennzeichnet, dass** der Übergabekopf (19) aus- und einfahrbar ausgebildet ist und das Shuttle-Band (15) zur Überbrückung einer beim Ausfahren entstehenden Lücke in der Transportstrecke (7, 9, 11, 13, 15, 19) dient.

8. Fördervorrichtung nach einem der vorhergehenden Ansprüche, **dadurch gekennzeichnet, dass** der Übergabekopf (19) innerhalb einer Förderebene um eine Achse senkrecht hierzu und/oder um eine Längsachse der Transportstrecke drehbar ausgebildet ist.

## Claims

1. A conveying device having a transportation section (7, 9, 11, 13, 15, 19) for piece goods,
**characterised in that**
arranged within the transportation section (7, 9, 11, 13, 15, 19) between two segments (13, 19) of the transportation section that do not adjoin each other directly there is a shuttle band (15) which, viewed in the conveying direction, is formed so that it is controllably movable forwards and backwards and has at least one controllable individual belt in order in this way to bridge over a gap in the transportation section (7, 9, 11, 13, 15, 19).

2. A conveying device according to claim 1, **characterised in that** the shuttle band (15) is formed so that it can be retracted at least in part under an adjacent segment (13) of the transportation section (7, 9, 11, 13, 15, 17, 19) .

3. A conveying device according to claim 1 or 2, **characterised in that** the shuttle band (15) is formed so that it can be extended at least in part out over an adjacent segment (19) of the transportation section (7, 9, 11, 13, 15, 19).

4. A conveying device according to one of the preceding claims, **characterised in that** the shuttle band (15) is formed so that it can be controlled in the direction of movement and/or in terms of speed of movement as a function of at least one of the parameters: extraction length, desired delivery speed, actual conveying speed, desired distance between goods to be conveyed, actual distance between the goods to be conveyed and required movement time of a delivery head (19) formed as a rotary conveyor.

5. A conveying device according to one of the preceding claims, **characterised in that** the at least one controllable individual belt of the shuttle band (15) is formed so that it can be controlled in the direction of movement and/or in terms of speed of movement as a function of at least one of the parameters: extraction length of the transportation section, desired delivery speed, actual conveying speed, desired distance between goods to be conveyed, actual distance between the goods to be conveyed and required movement time of a delivery head (19) formed as a rotary conveyor.

6. A conveying device according to one of the preceding claims, **characterised in that** the shuttle band (15) is located upstream of a delivery head (19) formed at the end of the transportation section.

7. A conveying device according to one of the preceding claims, **characterised in that** the delivery head (19) is formed so that it can be extended and retracted, and the shuttle band (15) is used to bridge over a gap in the transportation section (7, 9, 11, 13, 15, 19) that develops during the extension.

8. A conveying device according to one of the preceding claims, **characterised in that** the delivery head (19) is formed so that it can be rotated within a conveying plane about an axis perpendicularly thereto and/or about a longitudinal axis of the transportation section.

## Revendications

1. Dispositif de convoyage doté d'une piste de transport (7, 9, 11, 13, 15, 19) pour des marchandises de détail, **caractérisé en ce que**
à l'intérieur de la piste de transport (7, 9, 11, 13, 15, 19), entre deux portions (13, 19) de la piste de transport qui ne sont pas directement raccordées, se trouve une bande navette (15) laquelle, vue dans la direction de convoyage, est conçue de manière à être mobile pour pouvoir être commandée vers l'avant et vers l'arrière et comporte au moins une courroie simple pouvant être commandée afin de franchir un espace dans la piste de transport (7, 9, 11, 13, 15, 19).

2. Dispositif de convoyage selon la revendication 1, **caractérisé en ce que** la bande navette (15) est conçue de manière à être rétractable au moins partiellement sous une portion (13) adjacente de la piste de transport (7, 9, 11, 13, 15, 17, 19).

3. Dispositif de convoyage selon la revendication 1 ou 2, **caractérisé en ce que** la bande navette (15) est conçue de manière à pouvoir être sortie au moins partiellement au-dessus d'une portion (19) adjacente de la piste de transport (7, 9, 11, 13, 15, 19).

4. Dispositif de convoyage selon l'une quelconque des revendications précédentes, **caractérisé en ce que** la bande navette (15) est conçue de manière commandable dans la direction et/ou à la vitesse de déplacement en fonction d'au moins un de ces paramètres : longueur d'extension, vitesse de transfert souhaitée, vitesse de convoyage effective, distance souhaitée entre les marchandises transportées, distance effective entre les marchandises transportées et le temps de déplacement nécessaire d'une tête de transfert (19) conçue comme un convoyeur rotatif.

5. Dispositif de convoyage selon l'une quelconque des revendications précédentes, **caractérisé en ce que** l'au moins une courroie simple de la bande navette (15) est conçue de manière commandable dans la direction et/ou à la vitesse de déplacement en fonction d'au moins un de ces paramètres : longueur d'extension de la piste de transport, vitesse de transfert souhaitée, vitesse de convoyage effective, distance souhaitée entre les marchandises transportées, distance effective entre les marchandises transportées et temps de déplacement nécessaire d'une tête de transfert (19) conçue comme un convoyeur rotatif.

6. Dispositif de convoyage selon l'une quelconque des revendications précédentes, **caractérisé en ce que** la bande navette (15) se trouve devant une tête de transfert (19) formée à l'extrémité de la piste de transport.

7. Dispositif de convoyage selon l'une quelconque des revendications précédentes, **caractérisé en ce que** la tête de transfert (19) est conçue de manière à pouvoir être rétractée et sortie et la bande navette (15) sert à franchir un espace apparaissant dans la piste de transport (7, 9, 11, 13, 15, 19) lors de la sortie.

8. Dispositif de convoyage selon l'une quelconque des revendications précédentes, **caractérisé en ce que** la tête de transfert (19) est conçue de manière rotative à l'intérieur d'un plan de convoyage autour d'un axe perpendiculaire à celui-ci et/ou autour d'un axe longitudinal de la piste de transport.
